# EUROPEAN PATENT SPECIFICATION

(11) **EP 3 855 358 B1**
(45) Date of publication and mention of the grant of the patent: **25.02.2026**
(21) Application number: 18937263.4
(22) Date of filing: 16.10.2018
(51) Int. Cl.: G06F 18/22, G06V 10/10, G06V 10/75, G06V 10/74, G06V 20/40, G06V 20/10, G06V 40/16, G06V 10/20

(54) **OBJECT RECOGNITION METHOD, TERMINAL DEVICE, COMPUTER READABLE STORAGE MEDIUM AND COMPUTER PROGRAM PRODUCT**
OBJEKTERKENNUNGSVERFAHREN, ENDGERÄT, COMPUTERLESBARES SPEICHERMEDIUM UND COMPUTERPROGRAMMPRODUKT
PROCÉDÉ DE RECONNAISSANCE D' OBJETS, DISPOSITIF TERMINAL, SUPPORT DE STOCKAGE LISIBLE PAR ORDINATEUR ET PRODUIT PROGRAMME D'ORDINATEUR

(43) Date of publication of application: 28.07.2021
(73) Proprietor: HUAWEI TECHNOLOGIES CO., LTD., Shenzhen, Guangdong 518129 (CN)
(72) Inventor: YANG, Renzhi, Shenzhen, Guangdong 518129 (CN); JIANG, Jiyong, Shenzhen, Guangdong 518129 (CN); ZHANG, Teng, Shenzhen, Guangdong 518129 (CN); YAN, Rui, Shenzhen, Guangdong 518129 (CN); YU, Dongjian, Shenzhen, Guangdong 518129 (CN)
(74) Representative: Pfenning, Meinig & Partner mbB
(86) International application number: PCT/CN2018/110525
(87) International publication number: WO 2020/077544

(56) References cited:
- EP-A1- 3 454 242
- WO-A1-2018/111374
- CN-A- 102 831 385
- CN-A- 107 657 160
- CN-A- 107 798 292
- CN-A- 108 197 570
- CN-A- 108 509 436
- CN-A- 108 549 867
- US-A1- 2015 104 073
- US-A1- 2017 344 223
- KASTHURI JAYARAJAH ET AL: "Fusing WiFi and Video Sensing for Accurate Group Detection in Indoor Spaces", WORKSHOP ON PHYSICAL ANALYTICS, ACM,, 26 June 2016 (2016-06-26), NEW YORK NY 10121-0701 USA, pages 49 - 54, XP058261535, ISBN: 978-1-4503-4328-2, DOI: 10.1145/2935651.2935659

## Description

### TECHNICAL FIELD

This application relates to the field of object recognition technologies, and in particular, to an object recognition method, a terminal device, a computer readable storage medium and a computer program product.

### BACKGROUND

With development of terminal technologies, an object recognition technology is applied to increasingly more terminal devices. A mobile phone is used as an example. The mobile phone may collect an image of an object (for example, a face), and recognize an object in the image.

In the conventional technology, an object recognition technology can be used to recognize only an object that is in a relatively fixed form. In real life, forms of many objects, such as a cat and a dog, may change. When a terminal device recognizes that a frame of image includes a cat (for example, the cat is in a standing state), if a next frame of image still includes the cat, but a form of the cat changes (for example, the cat is in a lying state), the terminal device may fail to recognize the cat included in the next frame of image, or may perform incorrect recognition (for example, an animal may be recognized as a dog because the animal has a similar posture when the animal lies).

It can be learned that in the conventional technology, accuracy of recognizing an object whose form can change is relatively low.

CN 108 197 570 A discloses a people counting method, wherein faces are recognized in adjacent video frames. Similarity of face features in adjacent video frames is determined to correlate faces in these adjacent video frames.

### SUMMARY

The above mentioned problems are solved by the method according to claim 1, the terminal device according to claim 9, the storage medium according to claim 10 and the computer program product according to claim 11. Further improvements are provided in the dependent claims.

### BRIEF DESCRIPTION OF DRAWINGS

FIG. 1 is a schematic diagram of a camera imaging process according to an embodiment of the present invention;
FIG. 2 is a schematic structural diagram of a mobile phone according to an embodiment of the present invention;
FIG. 3 is a schematic structural diagram of a mobile phone according to an embodiment of the present invention;
FIG. 4 is a schematic flowchart of an object recognition method according to an embodiment of the present invention;
FIG. 5 is a schematic flowchart of an object recognition method according to an embodiment of the present invention;
FIG. 6 is a schematic diagram of a moving speed of a pixel according to an embodiment of the present invention;
FIG. 7 is a schematic diagram of a display interface of a mobile phone according to an embodiment of the present invention;
FIG. 8(a) and FIG. 8(b) are a schematic diagram of a display interface of a mobile phone according to an embodiment of the present invention;
FIG. 9 is a schematic diagram of a display interface of a mobile phone according to an embodiment of the present invention; and
FIG. 10 is a schematic diagram of a display interface of a mobile phone according to an embodiment of the present invention.

### DESCRIPTION OF EMBODIMENTS

The following describes the technical solutions in the embodiments of this application with reference to accompanying drawings in the embodiments of this application.

The following describes some terms in the embodiments of this application, to facilitate understanding for a person skilled in the art.

A raw image in the embodiments of this application is raw data obtained by a camera by converting a collected optical signal reflected by a target object into a digital image signal. The raw data may be data that is not processed. For example, the raw image may be data in a raw format. The data in the raw format includes information about the target object and a camera parameter. The camera parameter includes ISO, a shutter speed, an aperture value, white balance, or the like.

A preview image in the embodiments of this application is an image obtained after a terminal device processes a raw image. For example, the terminal device converts, based on a camera parameter in the raw image, the raw image into an image, such as an RGB image or YUV data, that includes color information. Usually, the preview image may be presented in an interface, such as a framing interface, of a camera application.

It should be noted that because the raw image collected by the camera dynamically changes (for example, a user holds the terminal device and moves, and consequently a coverage of the camera changes; or a location or a form of a target object changes), in other words, the raw image may include a plurality of frames of images, locations or forms of target objects (for example, persons or animals) included in different frames of images are different. Therefore, the preview image also dynamically changes. In other words, the preview image may also include a plurality of frames of images.

The preview image or the raw image may be used as an input image of an object recognition algorithm provided in the embodiments of this application. An example in which the preview image is used as the input image of the object recognition algorithm provided in the embodiments of this application is used below.

It should be noted that an image, for example, a raw image or a preview image, in the embodiments of this application may be in a form of a picture, or may be a set of data, for example, a set of some parameters (for example, a pixel and color information).

The pixel in the embodiments of this application is a minimum imaging unit in a frame of image. One pixel may correspond to one coordinate point in a corresponding image. One pixel may correspond to one parameter (for example, grayscale), or may correspond to a set of a plurality of parameters (for example, grayscale, luminance, and a color).

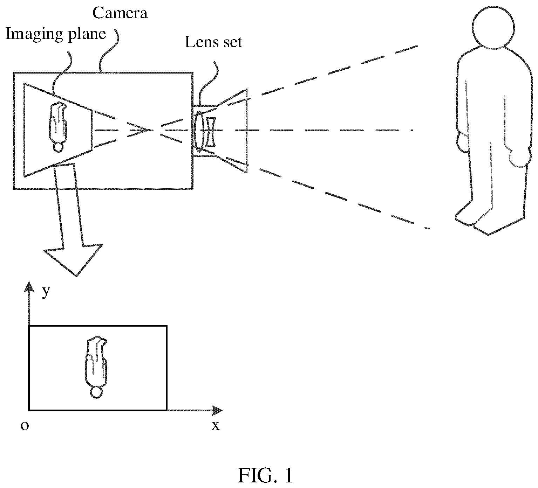

An image plane coordinate system in the embodiments of this application is a coordinate system established on an imaging plane. FIG. 1 is a schematic diagram of a camera imaging process according to an embodiment of this application. As shown in FIG. 1, when photographing a person, a camera collects an image of the person, and presents the collected image of the person on an imaging plane. In FIG. 1, an image plane coordinate system is represented by o-x-y, where o is an origin of the image plane coordinate system, and an x-axis and a y-axis each are a coordinate axis of the image plane coordinate system. Pixels in a raw image or a preview image may be represented in the image plane coordinate system.

"At least one" in the embodiments of this application is used to indicate "one or more". "A plurality of" means "two or more".

It should be noted that the term "and/or" in this specification describes only an association relationship for describing associated objects and represents that three relationships may exist. For example, A and/or B may represent the following three cases: Only A exists, both A and B exist, and only B exists. In addition, unless otherwise stated, the character "/" in this specification usually indicates an "or" relationship between the associated objects. In the descriptions of the embodiments of the present invention, terms such as "first" and "second" are only used for distinction and description, but cannot be understood as indication or implication of relative importance, and cannot be understood as an indication or implication of a sequence.

The following describes a terminal device, a graphical user interface (graphical user interface, GUI) used for the terminal device, and embodiments for using the terminal device. In some embodiments of this application, the terminal device may be a portable terminal, such as a mobile phone or a tablet computer, including a component having an image collection function, such as a camera. An example embodiment of the portable terminal device includes but is not limited to a portable terminal device using iOS^{®}, Android^{®}, Microsoft^{®}, or another operating system. The portable terminal device may alternatively be another portable terminal device, for example, a digital camera, provided that the portable terminal device has an image collection function. It should be further understood that in some other embodiments of this application, the terminal device may alternatively be a desktop computer having an image collection function, but not a portable electronic device.

The terminal device usually supports a plurality of applications, for example, one or more of the following applications: a camera application, an instant messaging application, or a photo management application. There may be a plurality of instant messaging applications, for example, WeChat, Tencent chat software (QQ), WhatsApp Messenger, Line (Line), Instagram (Instagram), KakaoTalk, and DingTalk. A user may send information such as text, voice, a picture, a video file, and another file to another contact through the instant messaging application. Alternatively, a user may implement a video call or a voice call with another contact through the instant messaging application.

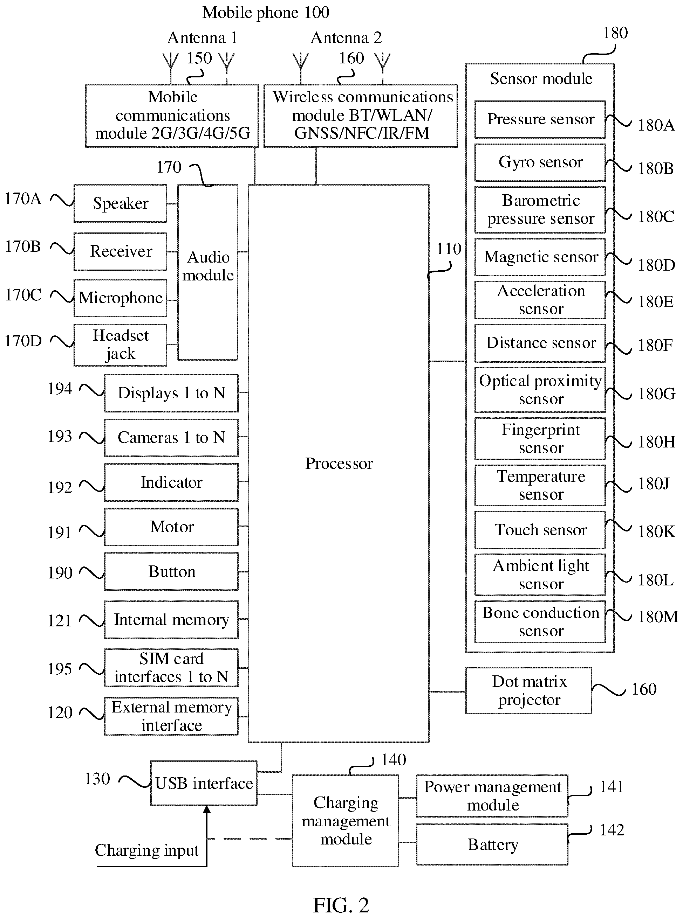

For example, the terminal device is a mobile phone. FIG. 2 is a schematic structural diagram of a mobile phone 100.

The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of the present invention does not constitute a specific limitation on the mobile phone 100. In some other embodiments of this application, the mobile phone 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors.

The controller may be a nerve center and a command center of the mobile phone 100. The controller may generate an operation control signal based on instruction operation code and a time sequence signal, to complete control of instruction reading and instruction execution.

The memory may be further disposed in the processor 110, and is configured to store an instruction and data. In some embodiments, the memory in the processor 110 is a cache memory. The memory may store an instruction or data just used or cyclically used by the processor 110. If the processor 110 needs to use the instruction or the data again, the processor 110 may directly invoke the instruction or the data from the memory. This avoids repeated access and reduces a waiting time of the processor 110, thereby improving system efficiency.

The mobile phone 100 implements a display function by using the GPU, the display 194, the application processor, and the like. The GPU is a microprocessor for image processing, and connects the display 194 to the application processor. The GPU is configured to: perform mathematical and geometric calculation, and render an image. The processor 110 may include one or more GPUs that execute a program instruction to generate or change display information.

The display 194 is configured to display an image, a video, and the like. The display 194 includes a display panel. The display panel may be a liquid crystal display (liquid crystal display, LCD), an organic ligh t-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the mobile phone 100 may include one or N displays 194, where N is a positive integer greater than 1.

The mobile phone 100 may implement an image photographing function by using the processor 110, the camera 193, the display 194, and the like. The camera 193 is configured to capture a static image, a dynamic image, or a video. Usually, the camera 193 may include a photosensitive element (for example, a lens set) and an image sensor. The lens set includes a plurality of lenses (convex lenses or concave lenses), and is configured to: collect an optical signal reflected by a target object, and transfer the collected optical signal to the image sensor. The image sensor generates a raw image of the target object based on the optical signal. The image sensor sends the generated raw image to the processor 110. The processor 110 processes the raw image (for example, converts the raw image into an image, such as an RGB image or YUV data, that includes color information), to obtain a preview image. The display 194 displays the preview image.

After the processor 110 runs the object recognition algorithm provided in the embodiments of this application to recognize an object in the preview image (for example, the user actively triggers the processor 110 to run the object recognition algorithm provided in this embodiment of this application to recognize the target object in the preview image), the display 194 displays the preview image and related information of the target object recognized from the preview image.

The internal memory 121 may be configured to store computer executable program code. The executable program code includes an instruction. The processor 110 runs the instruction stored in the internal memory 121, to implement various function applications of the mobile phone 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) created during use of the mobile phone 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The distance sensor 180F is configured to measure a distance. The mobile phone 100 may measure a distance through infrared light or a laser. In some embodiments, in a photographing scenario, the mobile phone 100 may measure a distance by using the distance sensor 180F, to implement fast focusing. In some other embodiments, the mobile phone 100 may further detect, by using the distance sensor 180F, whether a person or an object approaches.

For example, the optical proximity sensor 180G may include a light-emitting diode (LED) and an optical detector, for example, a photodiode. The light-emitting diode may be an infrared light-emitting diode. The mobile phone 100 emits infrared light by using the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180G, that the user holds the mobile phone 100 close to an ear to make a call, so as to automatically turn off a screen for power saving. The optical proximity sensor 180G may also be used in a leather case mode or a pocket mode to automatically unlock or lock the screen.

The ambient light sensor 180L is configured to sense luminance of ambient light. The mobile phone 100 may adaptively adjust luminance of the display 194 based on the sensed luminance of the ambient light. The ambient light sensor 180L may also be configured to automatically adjust white balance during photographing. The ambient light sensor 180L may also cooperate with the optical proximity sensor 180G to detect whether the mobile phone 100 is in a pocket to prevent an accidental touch.

The fingerprint sensor 180H is configured to collect a fingerprint. The mobile phone 100 may use a feature of the collected fingerprint to implement fingerprint unlocking, application access locking, fingerprint photographing, fingerprint call answering, and the like.

The temperature sensor 180J is configured to detect a temperature. In some embodiments, the mobile phone 100 executes a temperature processing policy based on the temperature detected by the temperature sensor 180J. For example, when the temperature reported by the temperature sensor 180J exceeds a threshold, the mobile phone 100 lowers performance of a processor near the temperature sensor 180J, to reduce power consumption for thermal protection. In some other embodiments, when the temperature is less than another threshold, the mobile phone 100 heats the battery 142 to prevent the mobile phone 100 from being shut down abnormally because of a low temperature. In some other embodiments, when the temperature is less than still another threshold, the mobile phone 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor, to determine a type of a touch event. Visual output related to the touch operation may be provided by using the display 194. In some other embodiments, the touch sensor 180K may alternatively be disposed on a surface of the mobile phone 100 and is at a location different from that of the display 194.

In addition, the mobile phone 100 may implement an audio function such as music playing or recording by using the audio module 170, the speaker 170A, the receiver 170B, the microphone 170C, the headset jack 170D, the application processor, and the like. The mobile phone 100 may receive input of the button 190, and generate button signal input related to a user setting and function control of the mobile phone 100. The mobile phone 100 may generate a vibration prompt (for example, an incoming call vibration prompt) by using the motor 191. The indicator 192 of the mobile phone 100 may be an indicator light, and may be configured to indicate a charging status and a battery level change, or may be configured to indicate a message, a missed call, a notification, and the like. The SIM card interface 195 of the mobile phone 100 is configured to connect to a SIM card. The SIM card may be inserted into the SIM card interface 195 or plugged from the SIM card interface 195, to implement contact with or separation from the mobile phone 100.

A wireless communication function of the mobile phone 100 may be implemented by using the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 150 or another function module.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 160 may be one or more devices that integrate at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

All the following embodiments may be implemented in a terminal device (for example, the mobile phone 100 or a tablet computer) having the foregoing hardware structure.

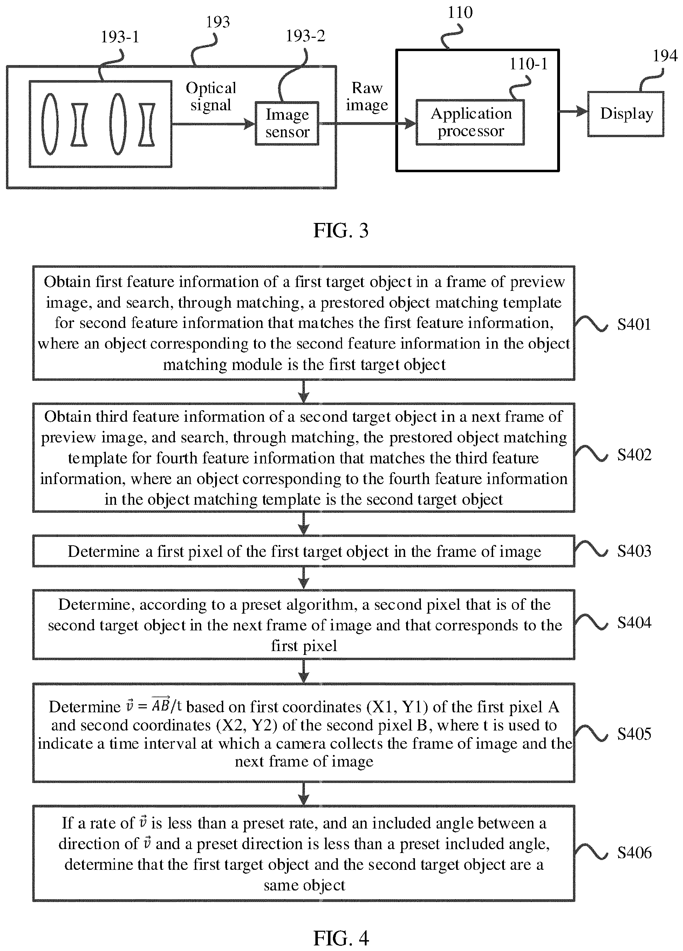

To facilitate description of the object recognition algorithm provided in the embodiments of this application, the following describes the object recognition algorithm in the embodiments of this application by using components related to the object recognition algorithm provided in the embodiments of this application. For details, refer to FIG. 3. For components in FIG. 3, refer to the related descriptions in FIG. 1. It should be noted that an example in which an application processor 110-1 is integrated into the processor 110 is used in FIG. 3.

In some embodiments of this application, the mobile phone 100 shown in FIG. 3 may recognize an object in the following process.

The display 194 of the mobile phone 100 displays a home screen, and the home screen includes various application icons (for example, a phone application icon, a video player icon, a music player icon, a camera application icon, and a browser application icon). The user taps an icon of a camera application on the home screen by using the touch sensor 180K (not shown in FIG. 2, and reference may be made to FIG. 1) disposed on the display 194, to open the camera application and start the camera 193. The display 194 displays an interface of the camera application, for example, a framing interface.

A lens set 193-1-1 in the camera 193 collects an optical signal reflected by a target object, and transfers the collected optical signal to an image sensor 193-2. The image sensor 193-2 generates a raw image of the target object based on the optical signal. The image sensor 315-2 sends the raw image to the application processor 110-1. The application processor 110-1 processes the raw image (for example, converts the raw image into an RGB image) to obtain a preview image. Alternatively, the image sensor 315-2 may send the raw image to another processor (for example, an ISP, which is not shown in FIG. 3), and the ISP processes the raw image to obtain a preview image. The ISP sends the preview image to the application processor 110-1.

In some embodiments of this application, a specific control may be displayed in the interface of the camera application. When the control is triggered, the mobile phone 100 enables a function of recognizing an object in the preview image. Specifically, the touch sensor 180K in the mobile phone 100 detects that the user taps the specific control in the interface (for example, the framing interface) of the camera application, and triggers the application processor 301-1 to run code of the object recognition algorithm provided in this embodiment of this application, to recognize the target object in the preview image.

In some other embodiments of this application, after obtaining the preview image (for example, the application processor converts the raw image into a GRB image), the application processor 110-1 may alternatively automatically run code of the object recognition algorithm provided in this embodiment of this application, to recognize an object in the preview image, and the user does not need to actively trigger object recognition.

In either manner, when the application processor 110-1 recognizes the target object in the preview image, the display 194 displays related information (for example, a name and a type of the target object, which are described below) of the target object.

It should be noted that an example in which the application processor 110-1 is integrated into the processor 110 is used in the foregoing content. Actually, only a GPU may be integrated into the processor 110, and the GPU is configured to perform a function of the application processor 110-1 in the foregoing content. Alternatively, only a CPU may be integrated into the processor 110, and the CPU is configured to perform a function of the application processor 110-1 in the foregoing content. In conclusion, a subject that runs the code of the object recognition algorithm provided in this embodiment of this application is not limited in this embodiment of this application.

In this embodiment of this application, the camera 193 may continuously collect images at a specific time interval, that is, collect a plurality of frames of images. Therefore, if each of the plurality of frames of images includes a different target object (at a different location, in a different form, and the like), when the plurality of frames of images are displayed in the interface (for example, the framing interface) for the camera application, an effect of a dynamic picture change is presented. For example, a location of the target object changes (for example, the target object is displaced, and moves from a first location to a second location) or a form of the target object changes (for example, the target object changes from a first form to a second form). Consequently, a display location and a form of the target object in each of the plurality of frames of raw images collected by the camera 193 change. The raw image dynamically changes. In other words, the preview image also dynamically changes.

To accurately recognize the target object in the preview image, in this embodiment of this application, there may be two processes in which the application processor 301-1 runs the code of the object recognition algorithm provided in this embodiment of this application to recognize the target object in the preview image. In a first process, the application processor 110-1 may recognize a target object in each frame of preview image. In a second process, when a similarity between two target objects in adjacent frames of images is greater than a preset similarity (for example, the two target objects belong to a same object type), the application processor 110-1 determines whether the two target objects are a same object. To be specific, when the similarity between the two target objects in the adjacent frames of images is higher, it indicates that there is a higher probability that the two target objects are the same object, and the application processor 110-1 may further determine whether the two target objects are the same object. For example, the application processor 110-1 may determine a correlation between the target objects in the adjacent frames of images. If the correlation exists (for example, a speed of moving between pixels of the target objects in the adjacent frames of images is less than or equal to a preset speed), the target objects in the adjacent frames of images are the same object (a specific process is described below). If the correlation does not exist (for example, a speed of moving between pixels of the target objects in the adjacent frames of images is greater than a preset speed), the target objects in the adjacent frames of images are different objects.

For example, the user opens a camera application in the mobile phone 100 to photograph a cat. A form of the cat is changing (such as lying or standing). Therefore, a preview image in a framing interface of the camera application dynamically changes. The mobile phone 100 may recognize that each frame of image includes a cat. However, in different frames of images, a form of the cat changes. Therefore, the mobile phone 100 may further determine whether cats included in adjacent frames of images are the same cat.

It should be noted that in the conventional technology, when recognizing objects in a plurality of frames of images (for example, a video or a dynamic image), the terminal device recognizes an object in each frame of image. It is assumed that after the terminal device recognizes an object in a first frame of image, a form of the object in a next frame of image changes, and therefore the terminal device re-recognizes the object in the next frame of image. Because the form changes, the terminal device may fail to recognize the object. Alternatively, because the form of the object changes, the terminal device recognizes the object as another object, in other words, recognizes the object incorrectly. However, actually, the object in the next frame of image and the object in the first frame of image are the same object.

According to the object recognition method provided in this embodiment of this application, when recognizing target objects in a plurality of frames of images (for example, a video or a dynamic image), the terminal device may consider a correlation (for example, a speed of moving between pixels of target objects in adjacent frames of images) between the adjacent frames of images to determine whether the target objects in the adjacent frames of images are the same object. Therefore, in this embodiment of this application, the terminal device can not only recognize the target object in each of the plurality of frames of images (for example, the video or the dynamic image), but also recognize whether the target objects in the plurality of frames of images are the same object, to improve object recognition accuracy.

The following describes a process in which the application processor 110-1 runs code of the object recognition algorithm provided in this embodiment of this application to recognize the target object in the preview image (a plurality of frames of preview images).

FIG. 4 is a schematic flowchart of an object recognition method according to an embodiment of this application. As shown in FIG. 4, an application processor 110-1 runs code of an object recognition algorithm to perform the following process.

S401: Obtain first feature information of a first target object in a frame of preview image, and search, through matching, a prestored object matching template for second feature information that matches the first feature information, where an object corresponding to the second feature information in the object matching module is the first target object.

A mobile phone 100 may obtain the first feature information of the first target object in the frame of preview image in a plurality of implementations, for example, foreground/background separation and an edge detection algorithm. This is not limited in this embodiment of this application.

In this embodiment of this application, the mobile phone 100 may store the object matching template, and the object matching template includes feature information of different types of objects. Feature information of an object includes an edge contour, color information and texture information of a feature point (such as an eye, a mouth, or a tail), and the like of the object. The object matching template may be set before delivery of the mobile phone 100, or may be customized by a user in a process of using the mobile phone 100.

It is assumed that the object matching template is set before delivery of the mobile phone 100. The following describes a process of obtaining the object matching template before delivery of the mobile phone 100.

A designer may use a plurality of images of a same target object as input images of the mobile phone 100, to recognize the plurality of images. The target object in each image has a different form. Therefore, the mobile phone 100 obtains feature information of the target object in each image.

For example, the target object is a cat. The designer may obtain 100 images (for example, photographed by the designer or obtained from a network side) of the cat in different forms. The cat in each of the 100 images has a different form. The mobile phone 100 recognizes the target object (for example, the cat) in each image, and stores feature information of the target object (for example, the cat), to obtain feature information of the target object in 100 forms. The feature information may include an edge contour, color information and texture information of a feature point (such as an eye, a mouth, or a tail), and the like of the target object in each form.

For example, the mobile phone 100 may store the feature information of the object in a table (for example, Table 1), namely, the object matching template.

**Table 1**

| .Object | Object type | Form | Feature information |
|---|---|---|---|
| Animal template | Cat | Lying | Edge contour 1, and color information and texture information of a feature point 1 |
| | | Standing | Edge contour 2, and color information and texture information of a feature point 2 |
| | Dog | Standing | Edge contour 3, and color information and texture information of a feature point 3 |

Table 1 shows only two form templates (for example, lying or standing) of an object type such as a cat. In actual application, another form may also be included. In other words, Table 1 shows only an example of an object matching template, and a person skilled in the art may detail Table 1. Still using the foregoing example, the designer obtains the 100 images of the cat in different forms for recognition, and obtains feature information of the cat in 100 forms. In other words, there are 100 forms corresponding to the cat in Table 1. Certainly, there are a plurality of types of cats, and feature information of different types of cats (that is, there are a plurality of object types of the cats) in various forms may be obtained in a similar manner. This is not limited in this embodiment of this application.

Therefore, in this embodiment of this application, when recognizing a target object in a frame of preview image, the application processor 110-1 may first obtain feature information (an edge contour, color information and texture information of a feature point, and the like) of the target object in the frame of preview image. If the obtained feature information matches a piece of feature information in the object matching template (for example, Table 1), the application processor 110-1 determines that an object corresponding to the feature information obtained through matching is the target object. Therefore, the object matching template may include as many objects as possible (for example, objects whose forms may change, such as an animal and a person), and feature information of each object in different forms to recognize different objects in all frames of images. In this way, the mobile phone 100 stores feature information of various objects in different forms. Therefore, the application processor 110-1 can recognize a target object in different forms in each frame of image. Certainly, the object matching template may alternatively be updated, for example, manually updated by the user or automatically updated by the mobile phone 100.

S402: Obtain third feature information of a second target object in a next frame of preview image, and search, through matching, the prestored object matching template for fourth feature information that matches the third feature information, where an object corresponding to the fourth feature information in the object matching template is the second target object.

It can be learned from the foregoing content that the preview image dynamically changes. Therefore, in this embodiment of this application, the application processor 110-1 may perform S401 on each frame of preview image. After determining the first target object in the frame of image, the application processor 110-1 may recognize the second target object in the next frame of preview image in a same manner. Because the application processor 110-1 recognizes the first target object and the second target object in the same manner (through the object matching template), the recognized first target object and the recognized second target object may be of a same object type (for example, both are cats), or may be of different object types (for example, the first target object is a cat, and the second target object is a dog).

In an example, in this embodiment of this application, when the recognized first target object and the recognized second target object are of a same object type (for example, both are cats), the application processor 110-1 may determine that the two target objects are the same object. In another example, to improve object recognition accuracy, when the recognized first target object and the recognized second target object are of a same object type, the application processor 110-1 may further continue to determine whether the first target object and the second target object are the same object, that is, continue to perform a subsequent step. When the recognized first target object and the recognized second target object are of different object types, the application processor 110-1 may not perform the subsequent step.

S403: Determine a first pixel of the first target object in the frame of image.

It should be noted that each frame of image is presented on an imaging plane. Therefore, after recognizing the first target object, the application processor 110-1 may determine the first pixel of the first target object in an image plane coordinate system. The first pixel may be a coordinate point at a central location of the first target object, or a coordinate point at a location of a feature point (for example, an eye) of the first target object.

S404: Determine, according to a preset algorithm, a second pixel that is of the second target object in the next frame of image and that corresponds to the first pixel.

The application processor 110-1 selects the first pixel in a plurality of possible cases. For example, the first pixel is the central location coordinates of the first target object or a coordinate point at a location of a feature point of the first target object. Assuming that the first pixel is the coordinate point at the central location of the first target object, the second pixel is a coordinate point at a central location of the second target object. Specifically, the application processor 110-1 may determine a central location of the target object according to a filtering algorithm (for example, a Kalman filtering algorithm). Details are not described in this embodiment of this application. Assuming that the first pixel is a feature point (for example, an eye) of the first target object, the second pixel is a feature point (for example, an eye) of the second target object. Specifically, the application processor 110-1 may search, according to a matching algorithm (for example, a similarity matching algorithm), the second target object for a feature point that matches the feature point of the first target object.

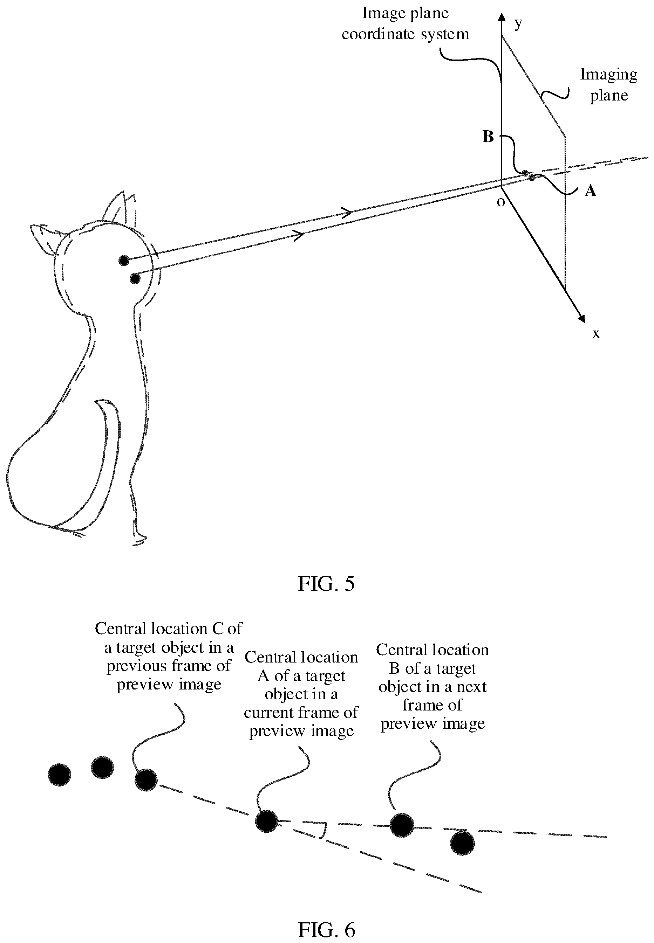

Referring to FIG. 5, for example, the target object is a cat. A form of the cat changes. A camera collects a plurality of frames of preview images. A frame of preview image is photographed for a cat in a solid line state, and a next frame of preview image is photographed for a cat in a dashed line state. The application processor 110-1 recognizes that the two target objects in the two frames of preview images are both cats. The application processor 110-1 determines that the first pixel of the first target object (the cat in the solid line state) in the frame of preview image is a point A on the imaging plane. The application processor 110-1 determines that the second pixel of the second target object (the cat in the dashed line state) in the next frame of preview image is a point B on the imaging plane. It should be noted that a pixel in the frame of image and a pixel in the next frame of image are both presented on the imaging plane. Therefore, in FIG. 5, the first pixel in the frame of image and the second pixel in the next frame of image are both marked on the imaging plane. However, actually, the first pixel and the second pixel are pixels in two different images.

S405: Determine *̅v̅*̅ = *̅A̅B̅*̅/t based on first coordinates (x1, y1) of the first pixel A and second coordinates (x2, y2) of the second pixel B, where t is used to indicate a time interval at which the camera collects the frame of image and the next frame of image.

It should be noted that when a location or a form of the target object changes, that is, when an object point on the target object changes, an image point (a pixel in the image plane coordinate system) corresponding to the object point also changes, and correspondingly, a display location of the target object in the preview image changes. Therefore, a change status of the location or the form of the object in the preview image may reflect a change status of a location or a form of an object in a real environment.

Usually, a time interval (for example, 30 ms) at which a camera 193 collects two frames of images is relatively short. The time interval may be set before delivery of the mobile phone 100, or may be customized by the user in a process of using the mobile phone 100. However, at the time interval, the location or the form of the target object in the real environment slightly changes. To be specific, although the location or the form of the target object in the real environment keeps changing, the camera 193 may continuously collect images of target objects at a relatively short time interval. Therefore, locations or forms of target objects in adjacent frames of images slightly change. In this case, the application processor 110-1 determines whether a speed of moving between two pixels of two target objects in the adjacent frames of images is less than a preset speed. If the moving speed is less than the preset speed, the two target objects are the same object. If the moving speed is greater than the preset speed, the two target objects are different objects.

Therefore, the application processor 110-1 determines *̅v̅*̅ = *̅A̅B̅*̅/t, namely, a speed at which the first pixel A moves to the second pixel B, based on the first coordinates (x1, y1) of the first pixel A and the second coordinates (x2, y2) of the second pixel B.

S406: If a rate of *̅v̅*̅ is less than a preset rate *vₒ,* and an included angle between a direction of *̅v̅*̅ and a preset direction is less than a preset included angle, determine that the first target object and the second target object are the same object.

The speed *̅v̅*̅ at which the first pixel A moves to the second pixel B includes the rate and the direction. Specifically, when the rate is less than the preset rate, and the included angle between the direction of *̅v̅*̅ and the preset direction is less than the preset angle, the first target object and the second target object are the same object. The preset rate may be set before delivery, for example, determined by the designer based on experience or an experiment.

The preset direction may be a direction determined based on an image before the frame of image. The following describes a process in which the application processor 110-1 determines the preset direction.

In an example, there are a plurality of frames of preview images. FIG. 6 shows coordinates of a central location of a target object in each frame of preview image on an imaging plane (a black dot in the figure represents a central location of a target object in a frame of preview image). Because a location or a form of the target object changes, a central location of the target object on the imaging plane also changes. The application processor 110-1 determines, based on the frame of image and a previous frame of image (an adjacent frame of image) of the frame of image, that a direction of a speed of moving between two pixels (central locations of two target objects) of the two target objects is *CA*, where the direction of *CA* is the preset direction.

The application processor 110-1 determines, based on the frame of image and a next frame of image (an adjacent frame of image) of the frame of image, that a direction of a speed of moving between two pixels (central locations of two target objects) of the two target objects is 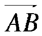 . In this case, when an included angle between *CA* and 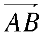 is less than a preset angle (for example, 10 degrees), the application processor 110-1 determines, based on the next frame of image (the adjacent frame of image) of the frame of image, that the two target objects are the same object.

In addition, the preset direction may alternatively be a direction customized by the user, a direction that is set before delivery of the mobile phone 100, or a direction determined in another manner. This is not limited in this embodiment of this application.

It should be noted that when determining whether the two target objects in the adjacent frames of images are the same object, the mobile phone 100, according to the claimed invention, considers both the direction and the rate that are of the speed, or in an embodiment that is not part of the claimed invention, the mobile phone 100 may consider only the rate, but not the direction of the speed. To be specific, when the rate is less than the preset rate. the mobile phone 100 determines that the two target objects are the same object. Alternatively, according to an embodiment that is not part of the claimed invention, the mobile phone 100 may consider only the direction of the speed, but not the rate. To be specific, when the included angle between the direction of the speed and the preset direction is less than the preset angle, the mobile phone 100 determines that the two target objects are the same object.

It should be noted that in the foregoing embodiment, the mobile phone 100 first determines whether the first target object and the second target object are of a same object type, and then determines whether a speed of moving between the first target object and the second target object is less than the preset speed. In actual application, a sequence of the two processes is not limited. For example, the mobile phone 100 may first determine whether the speed of moving between the first target object and the second target object is less than the preset speed, and then determine whether the first target object and the second target object belong to a same object type. Alternatively, when determining that the first target object and the second target object are of a same object type, the mobile phone 100 determines that the first target object and the second target object are the same object (in this case, the mobile phone 100 does not need to determine whether the speed of moving between the first target object and the second target object is less than the preset speed). Alternatively, when determining that the speed of moving between the first target object and the second target object is less than the preset speed, the mobile phone 100 determines that the first target object and the second target object are the same object (in this case, the mobile phone 100 does not need to determine whether the first target object and the second target object are of a same object type).

It should be noted that in the embodiment shown in FIG. 4, the frame of image and the next frame of image are used as an example for description. In actual application, the application processor 110-1 may process every two adjacent frames of images in a video or a dynamic image in the procedure of the method shown in FIG. 4.

The foregoing content is described by using a camera application (a camera application built in the mobile phone 100, or another camera application, for example, BeautyCam, downloaded to the mobile phone 100 from a network side) in the mobile phone 100 as an example. Actually, the object recognition algorithm provided in the embodiments of this application may alternatively be applied to another scenario, for example, a scenario in which an image needs to be collected by a camera, such as a QQ video or a WeChat video. For another example, the object recognition algorithm provided in the embodiments of this application can not only be used to recognize a target object in an image collected by a camera, but also be used to recognize a target object in a dynamic image or a video sent by another device (for example, the mobile communications module 150 or the wireless communications module 160 receives the dynamic image or the video sent by the another device), or a target object in a dynamic image or a video downloaded from the network side. This is not limited in this embodiment of this application.

In this embodiment of this application, after recognizing the target object in the preview image, the mobile phone 100 may display related information of the target object. For example, the related information includes a name, a type, or a web page link (for example, a purchase link to purchase information of the target object) of the target object. This is not limited in this embodiment of this application. In addition, the mobile phone 100 may display the related information of the target object in a plurality of manners. The related information of the target object may be displayed in a form of text information, or may be displayed in a form of an icon. The icon is used as an example. When detecting that the user triggers the icon, the mobile phone displays the related information of the target object.

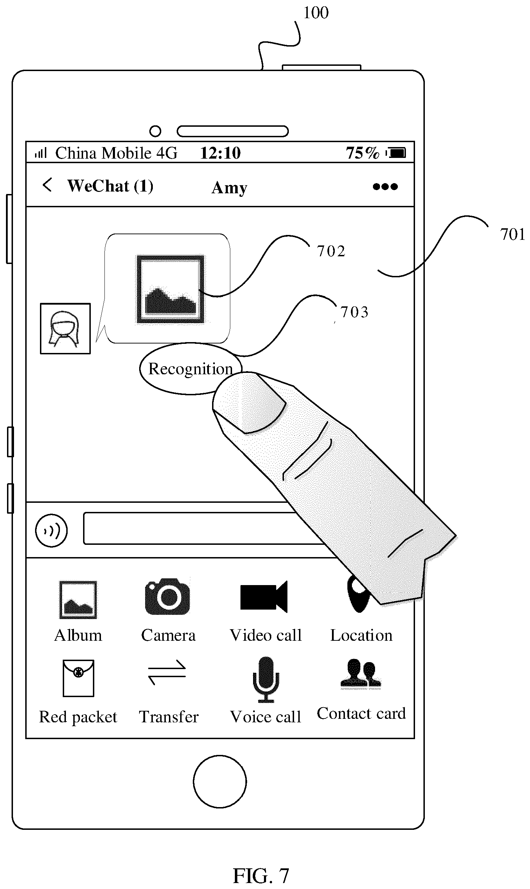

In an example, FIG. 7 to FIG. 9 show examples of several application scenarios in which the mobile phone 100 recognizes an object according to an embodiment of this application.

As shown in FIG. 7, a display interface of the mobile phone 100 displays a WeChat chat interface 701, and the chat interface 701 displays a dynamic image 702 sent by Amy. When the mobile phone 100 detects that a user triggers the dynamic image 702 (for example, touches and holds the dynamic image 702), the mobile phone 100 displays a recognition control 703. Alternatively, after detecting that the user triggers the dynamic image 702, the mobile phone 100 zooms in on the dynamic image; and when detecting that the user touches and holds the zoomed-in dynamic image, the mobile phone 100 displays the recognition control 703. When detecting that the user triggers the recognition control 703, the mobile phone 100 recognizes an object in the dynamic image 703 according to the object recognition method provided in this embodiment of this application.

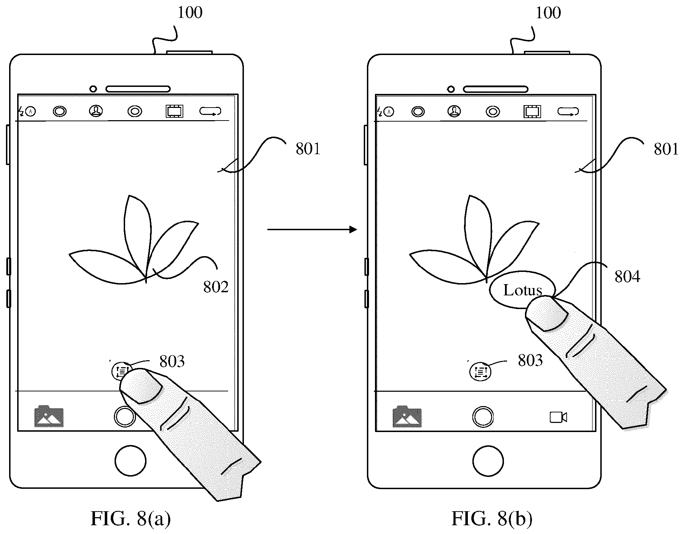

As shown in FIG. 8(a), a display interface of the mobile phone 100 displays a framing interface 801 of a camera application, and the framing interface 801 displays a preview image 802 (dynamically changing). The framing interface 801 includes a control 803. When the user triggers the control 803, an object in the preview image 802 is recognized according to the object recognition algorithm provided in this embodiment of this application. It should be noted that the control 803 in FIG. 8(a) and FIG. 8(b) is merely used as an example. In actual application, the control 803 may alternatively be displayed in another form or at another location. This is not limited in this embodiment of this application.

When recognizing the object in the preview image, the mobile phone 100 may display related information of the image. For example, referring to FIG. 8(b), the mobile phone 100 displays a tag 804 of the object (for example, a flower), and the tag 804 displays a name of the recognized flower. When detecting that the tag 804 is triggered, the mobile phone 100 displays more detailed information about the object (namely, the flower) (for example, displays an origin, an alias, and a planting manner that are of the flower). Alternatively, when detecting that the tag 804 is triggered, the mobile phone 100 displays another application (for example, Baidu baike), and displays more detailed information about the object in an interface of the another application. This is not limited in this embodiment of this application. It should be noted that when a location of the object in the preview image changes, a display location of the tag 804 in the preview image may also change with the location of the object.

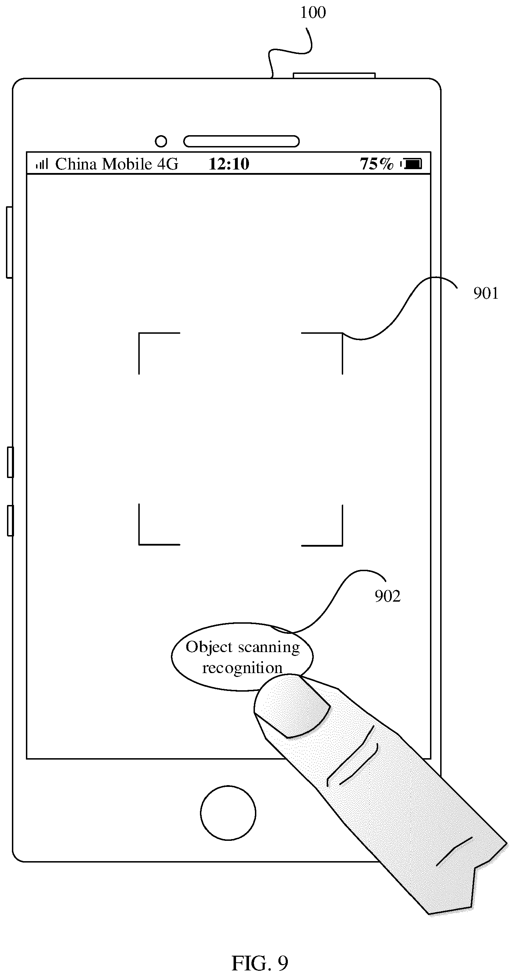

As shown in FIG. 9, the mobile phone 100 displays a scanning box 901, and when an image of an object is displayed in the scanning box 901, a scanning control 902 is displayed. When detecting that the user triggers the object scanning recognition control 902, the mobile phone 100 recognizes the image in the scanning box 901 according to the object recognition method provided in this embodiment of this application. The embodiment shown in FIG. 9 may be applied to a scenario with a scanning function, such as Taobao or Alipay. Taobao is used as an example. When recognizing an object in the scanning box 901, the mobile phone 100 may display a purchase link of the object.

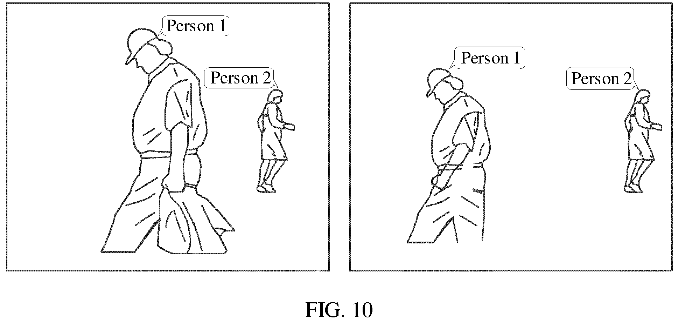

It should be noted that FIG. 7 to FIG. 9 show only the examples of the several application scenarios, and the object recognition algorithm provided in this embodiment of this application may be further applied to another scenario. For example, in the video surveillance field, referring to FIG. 10, a location and a form that are of a person on a display are changing. The object recognition algorithm provided in this embodiment of this application can be used to more accurately track a same person in a surveillance video. When a person in the video moves, a display location of a tag (a mark, such as a specific symbol or a color, used to identify a person) of the person may also move, to improve object tracking accuracy.

For another example, the object recognition algorithm provided in this embodiment of this application may be applied to a scenario in which the terminal device is unlocked through facial recognition. When the mobile phone 100 collects a plurality of frames of face images, and faces in the plurality of frames of face images are a same face, the terminal device is unlocked. For another example, the object recognition algorithm provided in this embodiment of this application may be further applied to a face payment scenario. When the mobile phone 100 displays a payment interface (for example, a WeChat payment interface or an Alipay payment interface), the mobile phone 100 collects a plurality of frames of face images, and faces in the plurality of frames of images are a same face, a payment procedure is completed. Similarly, the object recognition algorithm provided in this embodiment of this application may be further applied to a facial recognition -based punch in-out scenario. Details are not described.

For another example, a separate application may be set in the mobile phone 100. The application is used to photograph an object to recognize the object, so that the user can conveniently recognize the object.

Certainly, the object recognition method provided in this embodiment of this application may be further applied to a game application, for example, an augmented reality (augmented reality, AR) application or a virtual reality (virtual reality, VR) application. VR is used as an example. A virtual reality device (for example, a mobile phone or a computer) may recognize a same object in different images, display a tag of the object, and present the object and the tag to the user through a virtual reality display (AR glasses).

In the foregoing embodiments, the mobile phone 100 is used as an example. A display of the mobile phone 100 displays the recognized object and the related information of the object. When the object recognition method provided in this embodiment of this application is applicable to another scenario, the object recognized by the mobile phone 100 and the related information of the object may alternatively be displayed through another display (for example, an external display). This is not limited in this embodiment of this application.

The implementations of this application may be randomly combined to achieve different technical effects.

In the foregoing embodiments provided in this application, the method provided in the embodiments of this application is described from a perspective in which the terminal device (the mobile phone 100) is used as an execution body. To implement functions in the method provided in the embodiments of this application, the terminal may include a hardware structure and/or a software module, and implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

Based on a same concept, an embodiment of this application provides a terminal device. The terminal performs device the methods in the embodiments shown in FIG. 2 to FIG. 9. The terminal device includes a processing unit and a display unit.

The processing unit is configured to: recognize a first target object in a first frame of image; and recognize a second target object in a second frame of image adjacent to the first frame of image; and
if a similarity between the first target object and the second target object is greater than a preset similarity, and a moving speed is less than a preset speed, determine that the first target object and the second target object are a same object.

The display unit is configured to display the first frame of image or the second frame of image.

These modules/units may be implemented by hardware, or may be implemented by hardware by executing corresponding software.

When the terminal device is the mobile phone 100 shown in FIG. 2, the processing unit may be the processor 110 shown in FIG. 2, or the application processor 110-1 shown in FIG. 3, or another processor. The display may be the display 194 shown in FIG. 2, or may be another display (for example, an external display) connected to the terminal device.

An embodiment of this application further provides a computer storage medium. The storage medium includes a memory. The memory stores a program. When the program is executed, an electronic device is enabled to perform all the steps recorded in the method embodiment shown in FIG. 4.

An embodiment of this application further provides a computer program product. When the computer program product runs on an electronic device, the electronic device is enabled to perform all the steps recorded in the method embodiment shown in FIG. 4.

It should be noted that in the embodiments of this application, division into the units is an example and is merely logical function division, and may be other division in an actual implementation. Function units in the embodiments of the present invention may be integrated into one processing unit, or each of the units may exist alone physically, or two or more units may be integrated into one unit. For example, in the foregoing embodiments, the first obtaining unit and the second obtaining unit may be the same or different. The integrated unit may be implemented in a form of hardware, or may be implemented in a form of a software function unit.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "when it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

For the purpose of explanation, the foregoing descriptions are provided with reference to the specific embodiments. However, the foregoing example discussions are not intended to be detailed, and are not intended to limit this application to a disclosed precise form. According to the foregoing teaching content, many modification forms and variation forms are possible. The embodiments are selected and described to fully illustrate the principles of this application and practical application of the principles, so that another person skilled in the art can make full use of this application and the various embodiments that have various modifications applicable to conceived specific usage.

In the embodiments provided in this application, the method provided in the embodiments of this application is described from a perspective in which the terminal device is used as an execution body. To implement functions in the method provided in the embodiments of this application, the terminal device may include a hardware structure and/or a software module, and implement the functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

## Claims

1. An object recognition method, wherein the method comprises:
recognizing (S401), by a terminal device (100), a first target object in a first frame of image;
recognizing (S402), by the terminal device (100), a second target object in a second frame of image adjacent to the first frame of image;
determining (S403), by the terminal device (100), a first pixel of the first target object in the first frame of image; and
determining (S404), by the terminal device (100) according to a preset algorithm, a second pixel that is of the second target object in the second frame of image and that corresponds to the first pixel;
**characterized in that** the method further comprises:
determining (S405), by the terminal device (100), a moving speed that indicates a ratio between a displacement vector to a time, *̅v̅*̅ = *̅A̅B̅*̅/t, based on first coordinates (x1, y1) of the first pixel A and second coordinates (x2, y2) of the second pixel B, where t is used to indicate a time interval at which a camera collects the first frame of image and the second frame of image; and
if (S402 - S406) a similarity between the first target object and the second target object is greater than a preset similarity, a speed of moving of the ratio is less than a preset speed and an included angle between a direction of the moving speed and a preset direction is less than a preset angle, determining, by the terminal device (100), that the first target object and the second target object are a same object, where the preset direction is a movement direction from a third pixel to the first pixel; and the third pixel is a pixel that is determined by the terminal device (100) in a previous frame of image of the first frame of image according to a matching algorithm and that matches the first pixel.

2. The method according to claim 1, wherein before the recognizing, by a terminal device (100), a first target object in a first frame of image, the method further comprises:
detecting, by the terminal device (100), a user operation; in response to the user operation, opening a camera application in the terminal device, starting a camera, and displaying a framing interface (801); and displaying, in the framing interface (801), a preview image (802) collected by the camera, wherein the preview image comprises the first frame of image and the second frame of image.

3. The method according to claim 2, wherein the method further comprises: displaying a first control (803) in the framing interface (801), and when the first control (803) is triggered, recognizing, by the terminal device (100), a target object in the preview image (802).

4. The method according to any one of claims 1 to 2, wherein after the determining, by the terminal device (100), that the first target object and the second target object are a same object, the method further comprises:
outputting, by the terminal device (100), prompt information, wherein the prompt information is used to indicate that the first target object and the second target object are the same object.

5. The method according to claim 1, wherein before the recognizing, by a terminal device (100), a first target object in a first frame of image, the method further comprises:
displaying, by the terminal device (100), a chat interface of a communication application, wherein the chat interface comprises a dynamic image comprising the first frame of image and the second frame of image; and
detecting, by the terminal device (100), an operation performed on the dynamic image, and displaying a second control (902), wherein the second control (902) is used to trigger the terminal device (100) to execute the object recognition method according to claim 1 in the dynamic image.

6. The method according to claim 1, wherein before the recognizing, by a terminal device (100), a first target object in a first frame of image, the method further comprises:
displaying, by the terminal device (100), the first frame of image;
after the recognizing, by a terminal device (100), a first target object in a first frame of image, the method further comprises:
displaying, by the terminal device (100), a tag of the first target object in the first frame of image, wherein the tag comprises related information of the first target object;
before the recognizing, by the terminal device (100), a second target object in a second frame of image, the method further comprises:
displaying, by the terminal device (100), the second frame of image; and
after the determining, by the terminal device, that the first target object and the second target object are a same object, the method further comprises:
continuing displaying, by the terminal device (100), the tag in the second frame of image.

7. The method according to claim 1, wherein before the recognizing, by a terminal device (100), a first target object in a first frame of image, the method further comprises:
keeping the terminal device (100) in a screen-locked state;
collecting, by the terminal device (100), the first frame and the second frame of face images; and
after the terminal device (100) determines that a face in the first frame and a face in the second frame are a same face, the method further comprises: unlocking the terminal device (100).

8. The method according to claim 1 wherein before the recognizing, by a terminal device (100), a first target object in a first frame of image, the method further comprises:
displaying, by the terminal (100), a payment verification interface; and
collecting, by the terminal device (100), the first frame and the second frame ; and
after the terminal (100) determines that a face in the first frame and a face in the second frame are a same face, the method further comprises: performing, by the terminal (100), a payment procedure.

9. A terminal device (100), comprising a processor, a display unit and a memory, wherein
the memory is configured to store one or more computer programs; and
when the one or more computer programs stored in the memory are executed by the processor, the terminal device is enabled to implement the method according to any one of claims 1 to 8.

10. A computer readable storage medium, wherein the computer readable storage medium comprises a computer program, wherein the computer program comprises instructions which, when the program is run on a terminal device comprising a display unit, cause the terminal device to perform the method according to any one of claims 1 to 8.

11. A computer program product, wherein the computer program product comprises instructions which, when executed by a terminal device comprising a display unit, cause the terminal device to perform the method according to any one of claims 1 to 8.

## Patentansprüche

1. , Objekterkennungsverfahren, wobei das Verfahren Folgendes umfasst:
Erkennen (S401), durch ein Endgerät (100), eines ersten Zielobjekts in einem ersten Bildrahmen;
Erkennen (S402), durch das Endgerät (100), eines zweiten Zielobjekts in einem zweiten Bildrahmen, der an den ersten Bildrahmen angrenzt;
Bestimmen (S403), durch das Endgerät (100), eines ersten Pixels des ersten Zielobjekts im ersten Bildrahmen; und
Bestimmen (S404), durch das Endgerät (100) gemäß einem voreingestellten Algorithmus, eines zweiten Pixels, das dem zweiten Zielobjekt im zweiten Bildrahmen zugeordnet ist und dem ersten Pixel entspricht;
**dadurch gekennzeichnet, dass** das Verfahren ferner umfasst:
Bestimmen (S405), durch das Endgerät (100), einer Bewegungsgeschwindigkeit, die ein Verhältnis eines Verschiebungsvektors zu einer Zeit, *v̅ = A̅B̅*/*t* , darstellt, basierend auf ersten Koordinaten (x₁, y₁) des ersten Pixels A und zweiten Koordinaten (x₂, y₂) des zweiten Pixels B, wobei t verwendet wird, um ein Zeitintervall anzugeben, in dem eine Kamera den ersten und den zweiten Bildrahmen erfasst; und
falls (S402-S406) eine Ähnlichkeit zwischen dem ersten Zielobjekt und dem zweiten Zielobjekt größer als eine voreingestellte Ähnlichkeit ist, eine Geschwindigkeit des Verhältnisses kleiner als eine voreingestellte Geschwindigkeit ist und ein eingeschlossener Winkel zwischen einer Richtung der Bewegungsgeschwindigkeit und einer voreingestellten Richtung kleiner als ein voreingestellter Winkel ist, das Endgerät (100) bestimmt, dass das erste Zielobjekt und das zweite Zielobjekt dasselbe Objekt sind, wobei die voreingestellte Richtung eine Bewegungsrichtung von einem dritten Pixel zu dem ersten Pixel ist, und das dritte Pixel ein Pixel ist, das durch das Endgerät (100) in einem dem ersten Bildrahmen vorhergehenden Bildrahmen gemäß einem Abgleichsalgorithmus bestimmt wird und das dem ersten Pixel entspricht.

2. . Verfahren nach Anspruch 1, wobei das Verfahren, vor dem Erkennen, durch ein Endgerät (100), eines ersten Zielobjekts in einem ersten Bildrahmen ferner umfasst:
Erfassen, durch das Endgerät (100), einer Benutzeroperation; als Reaktion auf die Benutzeroperation, Öffnen einer Kameraanwendung im Endgerät;
Starten einer Kamera und Anzeigen einer Rahmenoberfläche (801); und Anzeigen, in der Rahmenoberfläche (801), eines durch die Kamera erfassten Vorschaubildes (802), wobei das Vorschaubild den ersten Bildrahmen und den zweiten Bildrahmen umfasst.

3. . Verfahren nach Anspruch 2, wobei das Verfahren ferner umfasst: Anzeigen eines ersten Steuerelements (803) in der Rahmenoberfläche (801), und wenn das erste Steuerelement (803) ausgelöst wird, Erkennen, durch das Endgerät (100), eines Zielobjekts im Vorschaubild (802).

4. . Verfahren nach einem der Ansprüche 1 bis 2, wobei das Verfahren, nach dem Bestimmen, durch das Endgerät (100), dass das erste Zielobjekt und das zweite Zielobjekt dasselbe Objekt sind, ferner umfasst:
Ausgeben, durch das Endgerät (100), von Hinweisinformationen, wobei die Hinweisinformationen dazu verwendet werden, anzuzeigen, dass das erste Zielobjekt und das zweite Zielobjekt dasselbe Objekt sind.

5. . Verfahren nach Anspruch 1, wobei das Verfahren, vor dem Erkennen, durch ein Endgerät (100), eines ersten Zielobjekts in einem ersten Bildrahmen ferner umfasst:
Anzeigen, durch das Endgerät (100), einer Chatoberfläche einer Kommunikationsanwendung, wobei die Chatoberfläche ein dynamisches Bild umfasst, das den ersten Bildrahmen und den zweiten Bildrahmen umfasst; und
Erfassen, durch das Endgerät (100), einer auf dem dynamischen Bild ausgeführten Bedienung sowie Anzeigen eines zweiten Steuerelements (902), wobei das zweite Steuerelement (902) dazu verwendet wird, das Endgerät (100) zum Ausführen des Objekterkennungsverfahrens nach Anspruch 1 im dynamischen Bild auszulösen.

6. . Verfahren nach Anspruch 1, wobei das Verfahren, vor dem Erkennen, durch ein Endgerät (100), eines ersten Zielobjekts in einem ersten Bildrahmen ferner umfasst:
Anzeigen, durch das Endgerät (100), des ersten Bildrahmens;
wobei das Verfahren nach dem Erkennen, durch ein Endgerät (100), eines ersten Zielobjekts in einem ersten Bildrahmen, ferner umfasst:
Anzeigen, durch das Endgerät (100), eines Tags des ersten Zielobjekts in dem ersten Bildrahmen, wobei der Tag zugehörige Informationen des ersten Zielobjekts umfasst;
wobei das Verfahren vor dem Erkennen, durch das Endgerät (100), eines zweiten Zielobjekts in einem zweiten Bildrahmen, ferner umfasst:
Anzeigen, durch das Endgerät (100), des zweiten Bildrahmens; und
wobei das Verfahren nach dem Bestimmen, durch das Endgerät, dass das erste Zielobjekt und das zweite Zielobjekt dasselbe Objekt sind, ferner umfasst:
fortgesetztes Anzeigen, durch das Endgerät (100), des Tags in dem zweiten Bildrahmen.

7. . Verfahren nach Anspruch 1, wobei das Verfahren, vor dem Erkennen, durch ein Endgerät (100), eines ersten Zielobjekts in einem ersten Bildrahmen ferner umfasst:
Halten des Endgeräts (100) in einem bildschirmgesperrten Zustand;
Erfassen, durch das Endgerät (100), des ersten Bildrahmens und des zweiten Bildrahmens von Gesichtsaufnahmen; und
wobei, nachdem das Endgerät (100) bestimmt hat, dass ein Gesicht im ersten Bildrahmen und ein Gesicht im zweiten Bildrahmen dasselbe Gesicht sind, das Verfahren ferner umfasst: Entsperren des Endgeräts (100),

8. . Verfahren nach Anspruch 1,
wobei vor dem Erkennen, durch ein Endgerät (100), eines ersten Zielobjekts in einem ersten Bildrahmen, das Verfahren ferner umfasst:
Anzeigen, durch das Endgerät (100), einer Zahlungsüberprüfungsoberfläche; und
Erfassen, durch das Endgerät (100), des ersten Bildrahmens und des zweiten Bildrahmens; und
wobei, nachdem das Endgerät (100) bestimmt hat, dass ein Gesicht im ersten Bildrahmen und ein Gesicht im zweiten Bildrahmen dasselbe Gesicht sind, das Verfahren ferner umfasst: Ausführen, durch das Endgerät (100), eines Zahlungsvorgangs.

9. . Endgerät (100), umfassend einen Prozessor, eine Anzeigeeinheit und einen Speicher, wobei
der Speicher konfiguriert ist, um ein oder mehrere Computerprogramme zu speichern; und
wenn das eine oder die mehreren im Speicher gespeicherten Computerprogramme durch den Prozessor ausgeführt werden, das Endgerät dazu eingerichtet ist, das Verfahren nach einem der Ansprüche 1 bis 8 zu implementieren.

10. . Computerlesbares Speichermedium, wobei das computerlesbare Speichermedium ein Computerprogramm umfasst, wobei das Computerprogramm Anweisungen umfasst, die, wenn das Programm auf einem Endgerät mit einer Anzeigeeinheit ausgeführt wird, das Endgerät veranlassen, das Verfahren nach einem der Ansprüche 1 bis 8 durchzuführen.

11. . Computerprogrammprodukt, wobei das Computerprogrammprodukt Anweisungen umfasst, die bei Ausführung durch ein Endgerät mit einer Anzeigeeinheit das Endgerät veranlassen, das Verfahren nach einem der Ansprüche 1 bis 8 durchzuführen.

## Revendications

1. Procédé de reconnaissance d'objet, le procédé comprenant :
la reconnaissance (S401), par un dispositif de terminal (100), d'un premier objet cible dans une première vue d'image ;
la reconnaissance (S402), par le dispositif de terminal (100), d'un second objet cible dans une seconde vue d'image adjacente à la première vue d'image ;
la détermination (S403), par le dispositif de terminal (100), d'un premier pixel du premier objet cible dans la première vue d'image ; et
la détermination (S404), par le dispositif de terminal (100) selon un algorithme prédéfini, d'un deuxième pixel qui est du second objet cible dans la seconde vue d'image et qui correspond au premier pixel ;
**caractérisé en ce que** le procédé comprend en outre :
la détermination (S405), par le dispositif de terminal (100), d'une vitesse de mouvement qui indique un rapport entre un vecteur de déplacement et un temps, *̅v̅*̅ = *̅A̅B̅*̅/*t,* sur la base de premières coordonnées (x1, y1) du premier pixel A et de secondes coordonnées (x2, y2) du deuxième pixel B, où t est utilisé pour indiquer un intervalle de temps lors duquel une caméra collecte la première vue d'image et la seconde vue d'image ; et
si (S402 - S406) une similarité entre le premier objet cible et le second objet cible est supérieure à une similarité prédéfinie, une vitesse de mouvement du rapport est inférieure à une vitesse prédéfinie et un angle inclus entre une direction de la vitesse de mouvement et une direction prédéfinie est inférieur à un angle prédéfini, la détermination, par le dispositif de terminal (100), que le premier objet cible et le second objet cible sont un même objet, où la direction prédéfinie est une direction de mouvement depuis un troisième pixel jusqu'au premier pixel ; et le troisième pixel est un pixel qui est déterminé par le dispositif de terminal (100) dans une vue d'image précédente de la première vue d'image selon un algorithme d'appariement et qui est apparié au premier pixel.

2. Procédé selon la revendication 1, dans lequel, avant la reconnaissance, par un dispositif de terminal (100), d'un premier objet cible dans une première vue d'image, le procédé comprend en outre :
la détection, par le dispositif de terminal (100), d'une opération utilisateur ;
en réponse à l'opération utilisateur, l'ouverture d'une application de caméra dans le dispositif de terminal ;
le démarrage d'une caméra, et l'affichage d'une interface de cadrage (801) ; et
l'affichage, dans l'interface de cadrage (801), d'une image de prévisualisation (802) collectée par la caméra, dans lequel l'image de prévisualisation comprend la première vue d'image et la seconde vue d'image.

3. Procédé selon la revendication 2, dans lequel le procédé comprend en outre : l'affichage d'une première commande (803) dans l'interface de cadrage (801), et lorsque la première commande (803) est déclenchée, la reconnaissance, par le dispositif de terminal (100), d'un objet cible dans l'image de prévisualisation (802).

4. Procédé selon l'une quelconque des revendications 1 et 2, dans lequel, après la détermination, par le dispositif de terminal (100), que le premier objet cible et le second objet cible sont un même objet, le procédé comprend en outre :
la sortie, par le dispositif de terminal (100), d'informations d'invite, dans lequel les informations d'invite sont utilisées pour indiquer que le premier objet cible et le second objet cible sont le même objet.

5. Procédé selon la revendication 1, dans lequel, avant la reconnaissance, par un dispositif de terminal (100), d'un premier objet cible dans une première vue d'image, le procédé comprend en outre :
l'affichage, par le dispositif de terminal (100), d'une interface de bavardage d'une application de communication, dans lequel l'interface de bavardage comprend une image dynamique comprenant la première vue d'image et la seconde vue d'image ; et
la détection, par le dispositif de terminal (100), d'une opération réalisée sur l'image dynamique, et l'affichage d'une seconde commande (902), dans lequel la seconde commande (902) est utilisée pour déclencher le dispositif de terminal (100) pour exécuter le procédé de reconnaissance d'objet selon la revendication 1 dans l'image dynamique.

6. Procédé selon la revendication 1, dans lequel, avant la reconnaissance, par un dispositif de terminal (100), d'un premier objet cible dans une première vue d'image, le procédé comprend en outre :
l'affichage, par le dispositif de terminal (100), de la première vue d'image ;
après la reconnaissance, par un dispositif de terminal (100), d'un premier objet cible dans une première vue d'image, le procédé comprend en outre :
l'affichage, par le dispositif de terminal (100), d'une étiquette du premier objet cible dans la première vue d'image, dans lequel l'étiquette comprend des informations connexes du premier objet cible ;
avant la reconnaissance, par le dispositif de terminal (100), d'un second objet cible dans une seconde vue d'image, le procédé comprend en outre :
l'affichage, par le dispositif de terminal (100), de la seconde vue d'image ; et
après la détermination, par le dispositif de terminal, que le premier objet cible et le second objet cible sont un même objet, le procédé comprend en outre :
la continuation de l'affichage, par le dispositif de terminal (100), de l'étiquette dans la seconde vue d'image.

7. Procédé selon la revendication 1, dans lequel, avant la reconnaissance, par un dispositif de terminal (100), d'un premier objet cible dans une première vue d'image, le procédé comprend en outre :
le maintien du dispositif de terminal (100) dans un état à écran verrouillé ;
la collecte, par le dispositif de terminal (100), de la première vue et de la seconde vue d'images de visage ; et
après que le dispositif de terminal (100) détermine qu'un visage dans la première vue et un visage dans la seconde vue sont un même visage, le procédé comprend en outre : le déverrouillage du dispositif de terminal (100),

8. Procédé selon la revendication 1, dans lequel, avant la reconnaissance, par un dispositif de terminal (100), d'un premier objet cible dans une première vue d'image, le procédé comprend en outre :
l'affichage, par le terminal (100), d'une interface de vérification de paiement ; et
la collecte, par le dispositif de terminal (100), de la première vue et de la seconde vue ; et
après que le terminal (100) détermine qu'un visage dans la première vue et un visage dans la seconde vue sont un même visage, le procédé comprend en outre : la réalisation, par le terminal (100), d'une procédure de paiement.

9. Dispositif de terminal (100), comprenant un processeur, une unité d'affichage, et une mémoire, dans lequel la mémoire est configurée pour stocker un ou plusieurs programmes d'ordinateur ; et
lorsque les un ou plusieurs programmes d'ordinateur stockés dans la mémoire sont exécutés par le processeur, le dispositif de terminal est en mesure de mettre en œuvre le procédé selon l'une quelconque des revendications 1 à 8.

10. Support de stockage lisible par ordinateur, dans lequel le support de stockage lisible par ordinateur comprend un programme d'ordinateur, dans lequel le programme d'ordinateur comprend des instructions qui, lorsque le programme est exploité sur un dispositif de terminal comprenant une unité d'affichage, amènent le dispositif de terminal à réaliser le procédé selon l'une quelconque des revendications 1 à 8.

11. Produit programme d'ordinateur, le produit programme d'ordinateur comprenant des instructions qui, lorsqu'elles sont exécutées par un dispositif de terminal comprenant une unité d'affichage, amènent le dispositif de terminal à réaliser le procédé selon l'une quelconque des revendications 1 à 8.
